# FASCICULE DE BREVET EUROPEEN

(11) **EP 0 889 825 B1**
(45) Date de publication et mention de la délivrance du brevet: **04.06.2003**
(21) Numéro de dépôt: 97953951.7
(22) Date de dépôt: 24.12.1997
(51) Int. Cl.: B64C 25/50, B64C 25/34

(54) **ELEMENT DE TRAIN D'ATTERISSAGE A BOGGIE ET ESSIEUX ORIENTABLES MECANIQUEMENT, POUR AERONEF**
FLUGZEUGFAHRWERKELEMENT MIT MECHANISCHEM DREHFAHRGESTELL UND DREHBARER ACHSE
AIRCRAFT LANDING GEAR ELEMENT WITH MECHANICALLY SLEWABLE UNDERCARRIAGE AND AXLES

(30) Priorité: 27.12.1996 FR 9616096
(43) Date de publication de la demande: 13.01.1999
(73) Titulaire: AIRBUS France, 31060 Toulouse Cedex 03 (FR)
(72) Inventeur: ENCARTHE, Philippe, D-22455 Hambourg (DE); HEMADOU, Benoît, F-31170 Tournefeuille (FR); MENEL, Claude, F-82000 Montauban (FR)
(74) Mandataire: Poulin, Gérard
(86) Numéro de dépôt international: FR9702427
(87) Numéro de publication internationale: WO98029304

(56) Documents cités:
- EP-A- 0 713 826
- WO-A-96/17771
- FR-A- 1 544 174
- US-A- 2 538 388
- US-A- 3 643 898
- US-A- 5 242 131

## Description

### Domaine technique

L'invention concerne un élément de train d'atterrissage à boggie et essieux orientables mécaniquement, pour aéronef.

Plus précisément, l'invention est particulièrement adaptée à un élément de train d'atterrissage arrière, susceptible d'équiper un avion gros porteur doté d'un train avant orientable, d'un train sous voilure et d'un train arrière implanté sous le fuselage.

### Etat de la technique

Sur la plupart des avions de ligne existants, le train d'atterrissage se compose d'un train avant orientable et d'un train sous voilure non orientable formé de deux éléments généralement placés sous les ailes lorsque le train est déployé.

Lorsqu'un avion équipé d'un train d'atterrissage de ce type est au sol, il tourne autour d'un centre instantané de rotation qui est situé en permanence sur l'axe du train sous voilure.

Sur les plus gros porteurs, la charge très élevée supportée par le train d'atterrissage,notamment au moment ou l'avion touche le sol, conduit à augmenter le nombre de roues en ajoutant au train sous voilure non orientable un train arrière formé de deux éléments implantés sous le fuselage. Afin de ne pas accroître exagérément le rayon de braquage de l'avion au sol et d'éviter une usure accélérée des pneumatiques, les boggies formant chacun des éléments du train arrière sont alors rendus orientables sous certaines conditions. Ces conditions imposent que l'avion soit au sol, que la vitesse des roues soit faible (par exemple, inférieure à environ 28 km/h) mais non nulle et que l'angle de braquage du train avant soit supérieur à une certaine limite (par exemple, environ 20°).

Dans ce type de train d'atterrissage, que l'on trouve notamment sur le "Boeing 747", l'orientation des boggies formant le train arrière situé sous le fuselage, est commandée hydrauliquement par des vérins, selon des valeurs proportionnelles à l'angle de braquage du train avant, afin que les axes de chacun des boggies orientables ainsi que l'axe du train avant soient concourants en un même point, situé sur l'axe du train sous voilure, ce point formant le centre instantané de rotation.

Grâce à cet agencement, le rayon de braquage est réduit, ce qui permet à l'avion de tourner plus efficacement. De plus, l'orientation des boggies du train arrière placé sous le fuselage permet de réduire le dérapage des pneumatiques et, par conséquent, leur usure.

Toutefois, cette technique connue ne supprime pas totalement le dérapage des pneumatiques du train arrière placé sous le fuselage, notamment lorsque chaque élément de ce train comprend plus de deux essieux. L'usure des pneumatiques est moindre mais subsiste toujours.

Par ailleurs, on connaît du document US-A-3 643 898 un élément de train d'atterrissage d'aéronef, dans lequel une colonne de train supporte à son extrémité une poutre apte à tourner autour de son axe propre et portant un essieu à chacune de ses extrémités, par l'intermédiaire de paliers inclinés. La mise en oeuvre d'un mécanisme de commande de direction, interposé entre la colonne de train et la poutre, commande une rotation de ladite poutre autour de son axe propre, qui a pour effet d'orienter simultanément les deux essieux dans le même sens, par l'intermédiaire des paliers inclinés. Dans certains modes de réalisation, le mécanisme de commande de direction commande simultanément une rotation de la poutre autour de son axe propre et un basculement de la poutre.

On connaît aussi, du document US-A-5 242 131, un avion doté d'éléments de train comprenant des boggies fixes supportant trois essieux. Des vérins assurent le pivotement de l'essieu avant ou, de préférence, arrière.

### Exposé de l'invention

L'invention a précisément pour objet un élément de train d'atterrissage orientable comportant un mécanisme au moyen duquel l'orientation du boggie s'accompagne d'une orientation simultanée des essieux avant et arrière de chacun des éléments de ce train, de telle sorte que l'avion puisse tourner au plus court et que le dérapage des pneumatiques, conduisant à leur usure prématurée, soit évité.

A cet effet, il est proposé conformément à l'invention un élément de train d'atterrissage d'aéronef, comprenant un boggie à au moins deux essieux et des moyens pour faire pivoter ce boggie autour d'un axe central orienté sensiblement verticalement lorsque l'aéronef est au sol, caractérisé par le fait que le boggie comprend un essieu avant et un essieu arrière aptes à pivoter respectivement autour d'un axe avant et d'un axe arrière parallèles à l'axe central et placés symétriquement de part et d'autre de cet axe central, un moyen de commande de pivotement agissant mécaniquement sur chacun des essieux avant et arrière, afin qu'un pivotement du boggie autour de l'axe central ait pour effets simultanés un pivotement en sens opposé de l'essieu avant et un pivotement dans le même sens de l'essieu arrière, respectivement autour des axes avant et arrière.

De préférence, le moyen de commande de pivotement est conçu de telle sorte que les pivotements de l'essieu avant et de l'essieu arrière aient une même amplitude, inférieure à celle du pivotement du boggie autour de l'axe central.

Dans une forme de réalisation préférentielle de l'invention, le moyen de commande de pivotement est totalement mécanique et comprend une tringle-rie avant et une tringlerie arrière indépendantes l'une de l'autre, toutes deux reliées à une pièce support fixe et non rotative, portant le boggie.

Les tringleries avant et arrière comprennent alors respectivement des palonniers avant et arrière, articulés sur le boggie entre l'axe central et les axes avant et arrière, des premières bielles avant et arrière, articulées entre la pièce support et les palonniers avant et arrière, et des deuxièmes bielles avant et arrière, articulées entre les palonniers avant et arrière et les essieux avant et arrière.

De façon plus précise, les palonniers avant et arrière sont articulés sur le boggie par des axes intermédiaires avant et arrière, disposés symétriquement par rapport à l'axe central, dans un premier plan contenant les axes central, avant et arrière, et orientés parallèlement à ces axes.

Selon un agencement préférentiel, les premières bielles avant et arrière sont alors disposées en totalité d'un même côté du premier plan et symétriquement par rapport à un deuxième plan perpendiculaire au premier plan et passant par l'axe central lorsque le boggie n'a pas pivoté autour de l'axe central. La deuxième bielle avant est alors située en totalité d'un côté du premier plan opposé à celui qui contient les premières bielles avant et arrière et la deuxième bielle arrière traverse le premier plan.

Dans chacune des tringleries avant et arrière, la première bielle et la deuxième bielle sont articulées sur deux tronçons du palonnier situés de part et d'autre de l'axe intermédiaire, de façon à être orientées selon des directions sensiblement perpendiculaires à des direction d'orientation de ces tronçons, lorsque le boggie n'a pas pivoté autour de l'axe central.

De façon comparable, les deuxièmes bielles avant et arrière sont articulées respectivement sur les essieux avant et arrière par l'intermédiaire de manilles avant et arrière orientées selon des directions sensiblement perpendiculaires aux deuxièmes bielles avant et arrière, lorsque le boggie n'a pas pivoté autour de l'axe central.

Dans une forme de réalisation particulière de l'invention, le boggie supporte de plus un essieu central fixe, orienté selon une direction perpendiculaire à l'axe central.

Par ailleurs, les moyens pour faire pivoter le boggie autour de l'axe central comprennent avantageusement des vérins agissant sur le boggie par l'intermédiaire de mécanismes à pignons-crémaillères.

### Brève description des dessins

On décrira à présent, à titre d'exemple non limitatif, une forme de réalisation préférentielle de l'invention, en se référant aux dessins annexes, dans lesquels:
- la figure 1 est une vue de dessus qui représente de façon schématique un avion équipé d'un train d'atterrissage conforme à l'invention ;
- la figure 2 est un schéma illustrant la détermination des angles de braquage du boggie et des essieux avant et arrière de l'élément de droite du train arrière de l'avion de la figure 1, lorsque le train avant est braqué vers la droite d'un angle α;
- la figure 3 est une vue de côté de l'un des éléments du train arrière, sous fuselage, de l'avion de la figure 1 ; et
- la figure 4 est une vue de dessus de l'élément illustré sur la figure 3.

### Exposé détaillé d'une forme de réalisation préférentielle

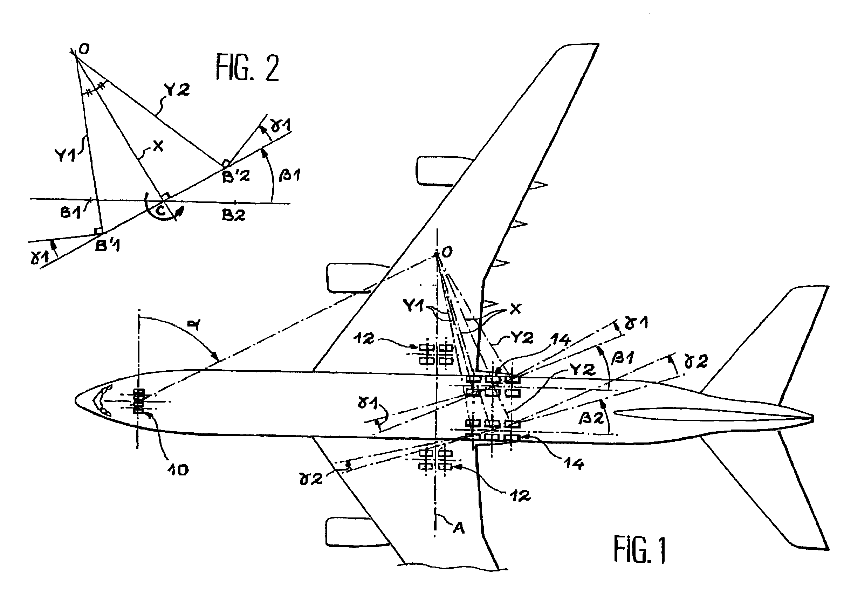

Sur la figure 1, on a représenté en vue de dessus un avion gros porteur dont le train d'atterrissage se compose d'un train avant 10 et d'un train principal formé de deux éléments sous voilure 12 et de deux éléments arrière 14.

De façon classique, le train avant 10, placé en position centrale sous la pointe avant du fuselage, est orientable. Dans la forme de réalisation illustrée à titre d'exemple, ce train avant 10 est constitué d'un seul essieu à quatre roues.

Les éléments 12 du train sous voilure sont non orientables et se trouvent généralement situés sous les ailes de l'avion, lorsque le train d'atterrissage est sorti. Dans la forme de réalisation illustrée à titre d'exemple, chaque élément 12 comprend deux essieux équipés chacun de deux roues.

Conformément à l'invention, chacun des éléments 14 du train arrière de l'avion est orientable, de même que les essieux avant et arrière de ces éléments.

Dans la forme de réalisation représentée, chacun des éléments 14 du train arrière comporte trois essieux de deux roues comprenant un essieu central fixe, et un essieu avant et un essieu arrière orientables. En variantes, il est à noter que chacun des éléments 14 peut ne comprendre que deux essieux de deux roues, ces deux essieux constituant alors l'essieu avant et l'essieu arrière orientables de l'invention. Inversement, chacun des éléments 14 du train arrière peut comprendre plus de trois essieux. Dans tous les cas, le nombre de roues portées par chaque essieu peut être supérieur à deux, sans sortir du cadre de l'invention.

Si l'on désigne par la référence A l'axe géométrique train sous voilure lorsque le train d'atterrissage est sorti, le centre instantané de rotation O de l'avion au sol est toujours situé sur cet axe A. Plus précisément, on a représenté à titre d'exemple sur les figures 1 et 2, l'emplacement du centre instantané de rotation O dans le cas où le train avant 10 est braqué vers la droite d'un angle α.

Pour la description qui va suivre, on se reportera utilement au schéma de la figure 2, qui concerne l'élément 14 de droite du train arrière. Avec des valeurs d'angles de braquage différentes, un schéma comparable peut être tracé pour l'élément 14 de gauche du train arrière.

Conformément à l'invention, lorsque le train avant 10 est braqué vers la droite de l'angle a, les éléments 14 de droite et de gauche du train arrière sont orientés vers la gauche respectivement d'un angle β1, et d'un angle β2. Ces angles β1 et β2 sont déterminés afin que les axes géométriques transversaux X des éléments 14 de droite et de gauche soient concourants en un point qui coïncide avec le centre instantané de rotation O.

De plus, les essieux avant et arrière de chacun des éléments 14 sont alors orientés respectivement vers la droite et vers la gauche d'un même angle γ1 pour l'élément de droite et d'un même angle γ2 pour l'élément de gauche. Les valeurs de ces angles γ1 et γ2 sont déterminées afin que les axes Y1 et Y2 de chacun des essieux avant et arrière ainsi orientés soient également concourants en un même point confondu avec le centre instantané de rotation O de l'avion.

Dans la pratique, les angles d'orientation β1 et β2 de chacun des éléments 14 sont calculés proportionnellement à l'angle α d'orientation du train avant 10 de l'avion. Comme le montrera la description qui va suivre, les angles d'orientation γ1 et γ2 des essieux avant et arrière de chacun des éléments 14 sont déterminés automatiquement par des mécanismes intégrés à ces éléments.

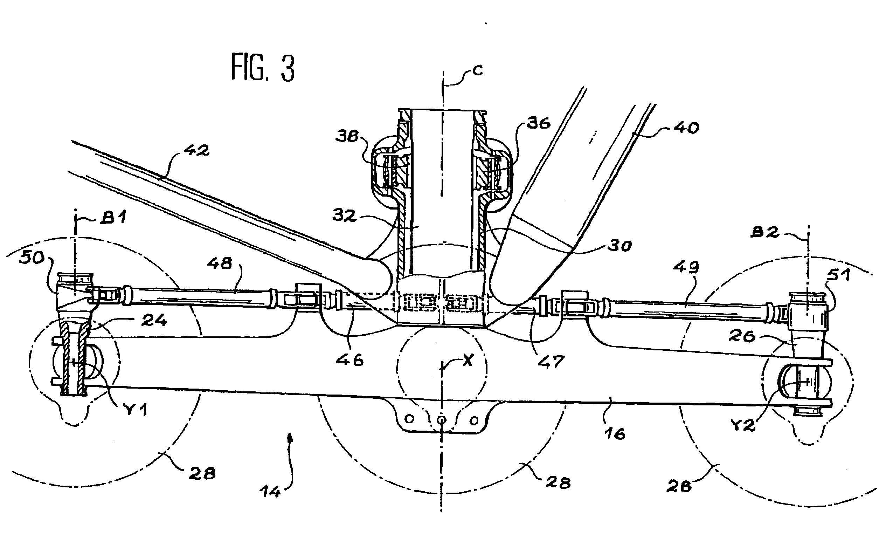

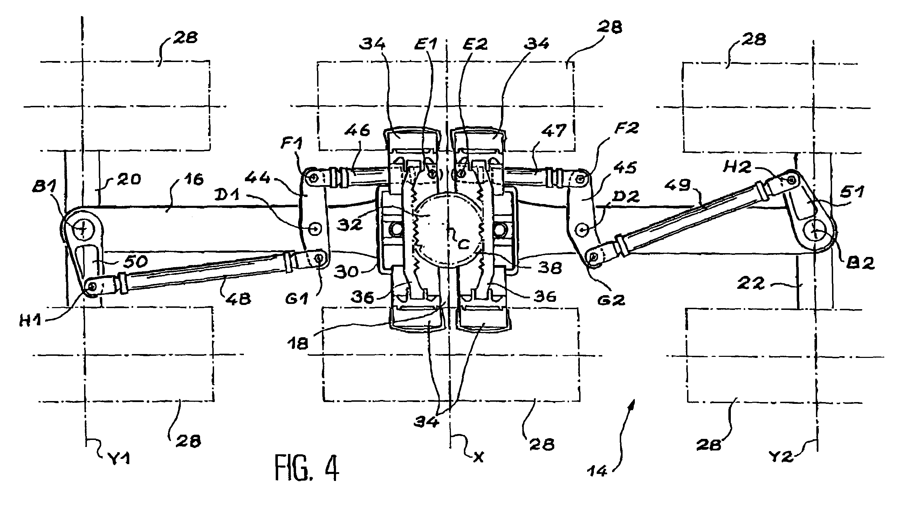

Les deux éléments 14 du train arrière de l'avion illustré schématiquement sur la figure 1 présentent une structure identique. La description détaillée de l'un de ces éléments 14, qui va à présent être faite en se référant aux figures 3 et 4, s'applique donc également à l'autre élément 14 du train arrière.

L'élément 14 de train arrière illustré sur les figures 3 et 4 comprend un boggie 16 en forme de poutre, qui supporte un essieu central 18, un essieu avant 20 et un essieu arrière 22.

L'essieu central 18 est supporté de façon tournante et non orientable par une partie centrale de plus grande section du boggie 16. L'axe géométrique de l'essieu central 18 coïncide avec l'axe transversal X de l'élément 14, qui passe par le centre instantané de rotation O de l'avion au sol, comme on l'a explique en référence aux figures 1 et 2.

Au contraire, les essieux avant 20 et arrière 22 sont montés à chacune des extrémités du boggie 16 de façon à pouvoir pivoter respectivement autour d'un axe avant B1 et d'un axe arrière B2 parallèles l'un à l'autre. Ces axes B1 et B2 sont orientés verticalement lorsque l'avion est au sol. Ils sont matérialisés par des arbres 24 et 26 solidaires respectivement des essieux 20 et 22 et supportés de façon pivotante par chacune des extrémités du boggie 16.

Dans la forme de réalisation représentée, chacun des essieux 18, 20 et 22 comporte deux roues équipées de pneumatiques 28.

Chacun des éléments 14 du train d'atterrissage comprend de plus une pièce support fixe 30, non rotative, portant le boggie 16. Conformément: à l'invention des moyens sont interposés entre cette pièce support 30 et le boggie 16 pour faire pivoter ce dernier autour d'un axe central C situé à égale distance des axes avant B1 et arrière B2 et orienté parallèlement à ces axes. Cet axe central C coupe l'axe géométrique transversal X de l'essieu central 18 et lui est perpendiculaire. L'axe central C est matérialisé sur le boggie 16 par une colonne 32 qui fait saillie vers le haut sur la partie centrale du boggie et pénètre dans une partie tubulaire de la pièce support 30. Plus précisément, la coopération entre la colonne 32 et la pièce support 30 est telle que le boggie 16 peut pivoter autour de l'axe central C, tout en étant porté par la pièce support 30.

Pour assurer la commande du pivotement du boggie 16 autour de l'axe C, la pièce support 30 est équipée de deux groupes de deux vérins antagonistes 34 (figure 4). Chacun de ces groupes de vérins antagonistes commande le déplacement d'une crémaillère 36 orientée tangentiellement à la colonne 32, selon une direction parallèle à l'axe géométrique X lorsque le boggie n'a pas pivoté autour de l'axe central C. Les deux crémaillères 36 sont en prise sur un pignon 38 solidaire de la colonne 32.

Selon que les vérins antagonistes 34 sont actionnés dans un premier sens ou en sens opposé, le boggie 16 pivote vers la droite ou vers la gauche sous l'action du mécanisme à pignons-crémaillères 36,38. Comme l'illustre le schéma de la figure 2, le pivotement du boggie 11 autour de l'axe C a pour effet de déplacer les axes B1 et B2 en B'1 et B'2.

De façon classique, la pièce support 30 qui porte le boggie 16 est reliée à la structure de l'avion par un mécanisme à bras articulés, au moyen duquel l'ensemble 14 peut être sorti et rentré dans un logement (non représenté) prévu à cet effet dans le fuselage de l'avion. Ce mécanisme à bras articulés est bien connu des spécialistes et ne fait pas partie de l'invention. Comme l'illustre la figure 3, il comprend un bras amortisseur arrière 40 et une contrefiche avant 42, dont les extrémités sont articulées sur la pièce support 30 respectivement à l'arrière et à l'avant de l'axe C.

Conformément à L'invention, un moyen de commande de pivotement est prévu pour agir sur chacun des essieux avant 20 et arrière 22, afin qu'un pivotement du boggie 16 autour de l'axe central C ait pour effet un pivotement en sens opposé de l'essieu avant 20 pivotement dans le même sens de l'essieu arrière 22, respectivement autour des axes avant B1 et arrière B2.

Plus précisément, ces moyens de commande de pivotement comprennent une tringlerie avant et une tringlerie arrière reliées l'une et l'autre à la pièce support 30 et agencées de telle sorte que les pivotements des essieux avant 20 et arrière 22 aient une même amplitude, inférieure à celle du boggie 16 autour de l'axe central C.

Comme l'illustre en particulier la figure 4, la tringlerie avant comprend un palonnier avant 44, articulé sur le boggie 16 par un axe intermédiaire avant D1 parallèle aux axes C, B1 et B2 et situé dans le même plan P que ces axes, entre l'axe central C et l'axe avant B1.

La tringlerie avant comprend de plus une première bielle avant 46 interposée entre la pièce support 30 et le palonnier avant 44 et une deuxième bielle avant 48, interposée entre le palonnier avant 44 et une manille 50 solidaire de l'arbre 24 lié à l'essieu avant 20.

De façon plus précise, la structure de la tringlerie avant est telle que la première bielle avant 46 est située en totalité d'un côté du plan P et que la deuxième bielle avant 48 est située en totalité de l'autre côté du plan P. De plus, lorsque les axes des essieux avant 20 et arrière 22 sont orientés sensiblement perpendiculairement à ce plan, comme l'illustre la figure 4, c'est-à-dire lorsque le boggie 16 n'a pas pivoté, autour de l'axe central C, la première bielle avant 46 est orientée sensiblement parallèlement au plan P.

Les extrémités de la première bielle avant 46 sont articulées respectivement sur la pièce support fixe 30 et sur une première extrémité du palonnier avant 44 par des axes E1 et F1. De façon comparable, les extrémités de la deuxième bielle avant 48 sont articulées respectivement sur l'extrémité opposée du palonnier avant 44 et à l'extrémité de la manille 50 par des axes G1 et H1. Les axes E1, F1, G1 et H1 sont tous parallèles aux axes C, B1, B2 et D1.

Afin que la transmission des efforts s'effectue dans les meilleures conditions possibles, la première bielle avant 46 et la deuxième bielle avant 48 sont articulées sur les tronçons du palonnier avant 44 situés de part et d'autre de l'axe intermédiaire avant D1 selon des directions qui sont sensiblement perpendiculaires aux directions d'orientation de chacun de ces tronçons, lorsque le boggie 16 n'a pas pivoté autour de l'axe central. Pour la même raison, dans les mêmes conditions d'orientation du boggie 16, la manille avant 50 est orientée selon une direction sensiblement perpendiculaire à la deuxième bielle avant 48.

La tringlerie arrière, qui relie la pièce support 30 à l'arbre 26 solidaire de l'essieu arrière 22, présente une configuration très comparable à celle de la tringlerie avant.

Ainsi, la tringlerie arrière comporte un palonnier arrière 45, articulé sur le boggie 16 par un axe intermédiaire arrière D2, interposé entre l'axe central C et l'axe arrière B2, situé dans le même plan P que ces axes et orienté parallèlement à eux. Les axes intermédiaires D1 et D2 sont disposés symétriquement de part et d'autre de l'axe central C et ils sont plus proches de cet axe C que des axes avant B1 et arrière B2.

La tringlerie arrière comporte aussi une première bielle arrière 47 reliant le palonnier arrière 45 à la pièce support fixe 30 et une deuxième bielle arrière 49 reliant le palonnier arrière 45 à une manille 51 solidaire de l'arbre 26 lié à l'essieu arrière 22.

La première bielle arrière 47 est située en totalité du même côte du plan P que la première bielle avant 46 et elle est orientée sensiblement parallèlement à ce plan lorsque le boggie 16 n'a pas pivoté comme l'illustre la figure 4. De façon plus précise, les premières bielles avant 46 et arrière 47 sont alors agencées de façon pratiquement symétrique par rapport à un plan médian du boggie 16 passant par l'axe central C et orienté perpendiculairement au plan P.

En revanche, la deuxième bielle arrière 49 présence une orientation différente de celle de la deuxième bielle avant 48. Plus précisément, la deuxième bielle arrière 49 traverse le plan P. Cet agencement a pour effet de commander des pivotements d'amplitude identique mais en sens oppose des essieux avant 20 et arrière 22.

Les extrémités de la première bielle arrière 47 sont articulées respectivement sur la pièce support fixe 30 et sur une première extrémité du palonnier arrière 45 par des axes E2 et F2. De même, les extrémités de la deuxième bielle arrière 49 sont articulées respectivement sur l'autre extrémité du palonnier arrière 45 et sur l'extrémité de la manille 51 par des axes G2 et H2 . Les axes E2, F2, G2, et H2 sont également parallèles aux axes C, B1, B2, D1 e D2.

Afin d'assurer une transmission aussi efficace que possible des efforts, la première bielle arrière 47 et la deuxième bielle arrière 49 sont orientées selon des directions sensiblement perpendiculaires aux directions d'orientation des deux tronçons du palonnier arrière 45 sur lesquels ces bielles sont articulées, lorsque le boggie n'a pas pivoté autour de l'axe central C. Pour la même raison et dans les mêmes conditions, la deuxième bielle arrière 49 est aussi orientée selon une direction sensiblement perpendiculaire à la manille arrière 51.

On comprend qu'en donnant aux différents bras de levier des tringleries avant et arrière ainsi constituées des valeurs appropriées, un pivotement du boggie 16 autour de l'axe central C se traduit automatiquement par des pivotements dans deux directions opposées des essieux avant 20 et arrière 22 autour des axes B1 et B2. De plus les amplitudes de ces pivotements sont telles que le caractère concourant des axes X, Y1 et Y2 au centre instantané de rotation O, expliqué précédemment en se référant aux figures 1 et 2, est obtenu.

Bien entendu, si le mécanisme à tringleries qui vient d'être décrit constitue une forme de réalisation préférentielle de l'invention, la commande du pivotement des essieux avant et arrière pourrait être assurée de façon différente, et notamment par des mécanismes à pignons et crémaillères, sans sortir du cadre de l'invention.

## Revendications

1. Élément (14) de train d'atterrissage d'aéronef, comprenant un boggie (16) à au moins deux essieux (18,20,22) et des moyens (34,36,38) pour faire pivoter ce boggie autour d'un axe central (C) orienté sensiblement verticalement lorsque l'aéronef est au sol, **caractérisé par le fait que** le boggie (16) comprend un essieu avant (20) et un essieu arrière (22) aptes à pivoter respectivement autour d'un axe avant (B1) et d'un axe arrière (B2) parallèles à l'axe central (C) et placés symétriquement de part et d'autre de cet axe central, un moyen (44-49) de commande de pivotement agissant mécaniquement sur chacun des essieux avant (20) et arrière (22), afin qu'un pivotement du boggie (16) autour de l'axe central (C) ait pour effets simultanés un pivotement en sens opposé de l'essieu avant (20) et un pivotement dans le même sens de l'essieu arrière (22), respectivement autour des axes avant (B1) et arrière (B2).

2. Élément de train d'atterrissage selon la revendication 1, dans lequel le moyen (44-49) de commande de pivotement est conçu de telle sorte que les pivotements de l'essieu avant (20) et de l'essieu arrière (22) aient une même amplitude, inférieure à celle du pivotement du boggie (16) autour de l'axe central (C).

3. Élément de train d'atterrissage selon l'une quelconque des revendications 1 et 2, dans lequel le moyen de commande de pivotement comprend une, tringlerie avant (44,46,48) et une tringlerie arrière (45, 47,49) indépendantes l'une de l'autre, toutes deux reliées a une pièce support fixe (30), non rotative, portant le boggie (16).

4. Elément de train d'atterrissage selon la revendication 3, dans lequel les tringleries avant et arrière comprennent respectivement des palonniers avant (44) et arrière (45), articulés sur le boggie (16) entre l'axe central (C) et les axes avant (B1) et arrière (B2), des premières bielles avant (46) et arrière (47), articulées entre la pièce support (30) et les palonniers avant (44) et arrière (45), et des deuxièmes bielles avant (48) et arrière (49), articulées entre les palonniers avant (44) et arrière (45) et les essieux avant (20) et arrière (22).

5. Élément de train d'atterrissage selon la revendication 4, dans lequel les palonniers avant (44) et arrière (45) sont articulés sur le boggie (16) par des axes intermèdiares avant (D1) et arrière (D2), disposés symétriquement par rapport à l'axe central (C), dans un premier plan (P) contenant les axes central (C), avant (B1) et arrière (B2) et orientés parallèlement à ces axes.

6. Élément de train d'atterrissage selon la revendication 5, dans lequel les premières bielles avant (46) et arrière (47) sont disposées en totalité d'un même côté du premier plan (P) et symétriquement par rapport à un deuxième plan perpendiculaire au premier plan (P) et passant par l'axe central (C), lorsque le boggie n'a pas pivoté autour de cet axe, la deuxième bielle avant (48) étant située en totalité d'un côté du premier plan opposé à celui qui contient les premières bielles avant (46) et arrière (47), et la deuxième bielle arrière (49) traversant le premier plan.

7. Elément de train d'atterrisage selon l'une quelconque des revendications 5 et 6, dans lequel, dans chacune des tringleries avant et arrière, la première bielle (46, 47) et la deuxième bielle (48,49) sont articulées sur deux tronçons du palonnier (44,45), situés de part et d'autre de l'axe intermédiaire (D1,D2), de façon à être orientées selon des directions sensiblement perpendiculaires à des directions d'orientation de ces tronçons, lorsque le boggie (16) n'a pas pivoté autour de l'axe central (C).

8. Élément de train d'atterrissage selon l'une quelconque des revendications 4 à 7, dans lequel les deuxièmes bielles avant (48) et arrière (49) sont articulées respectivement sur les essieux avant (20) et arrière (22) par l'intermédiaire de manilles avant (50) et arrière (51) orientées selon des directions sensiblement perpendiculaires aux deuxièmes bielles avant (48) et arrière (49), lorsque le boggie (16) n'a pas pivoté autour de l'axe central (C).

9. Élément de train d'atterrissage selon l'une quelconque des revendications précédentes, dans lequel le boggie (16) supporte de plus un essieu central fixe (18), orienté selon une direction perpendiculaire à l'axe central (C).

10. Elément de train d'atterrissage selon l'une quelconque des revendications précédentes, dans lequel les moyens pour faire pivoter le boggie (16) autour de l'axe central (C) comprennent des vérins (34) agissant sur le boggie par l'intermédiaire de mécanismes (36,38) à pignons-crémaillères.

## Patentansprüche

1. Fahrwerkelement (14) eines Luftfahrzeugs mit einem Drehgestell bzw. Untergestell 16 mit mindestens zwei Radachsen (18, 20, 22) und Mitteln (34, 36, 38) zum Schwenken dieses Drehgestells um eine Mittelachse (C), die im wesentlichen vertikal ausgerichtet ist, wenn sich das Luftfahrzeug am Boden befindet, dadurch dass das Drehgestell (16) eine Vorderradachse (20) und eine Hinterradachse (22) umfasst, die jeweils um eine zu der Mittelachse (C) parallele Vorderachse (B1) und Hinterachse (B2) drehen/schwenken kann und die symmetrisch auf beiden Seiten dieser Mittelachse angeordnet sind, wobei ein Mittel (44 bis 49) zur Steuerung der Dreh-/Schwenkbewegung mechanisch auf jede Vorderradachse (22) und Hinterradachse (22) einwirkt, damit ein Drehen/Schwenken des Drehgestells (16) um die Mittelachse (C) die gleichzeitigen Wirkungen eines Drehens/Schwenkens der Vorderradachse (20) in entgegengesetzter Richtung und eines Drehens/Schwenkens der Hinterradachse (22) in der gleichen Richtung jeweils um die Vorderachse (B1) und die Hinterachse (B2) herum bewirkt.

2. Fahrwerkelement nach Anspruch 1, wobei das Mittel (44-49) zur Steuerung des Drehens/Schwenkens derart gestaltet ist, dass die Schwenkbewegungen der Vorderradachse (20) und der Hinterradachse (22) eine gleiche Amplitude aufweisen, die geringer ist als diejenige des Drehens/Schwenkens des Drehgestells (16) um die Mittelachse (C).

3. Fahrwerkelement nach einem der Ansprüche 1 oder 2, wobei das Mittel zur Steuerung des Drehens/Schwenkens ein vorderes Gestänge (44,46,48) und ein hinteres Gestänge (45,47,49) umfasst, die voneinander unabhängig sind und beide mit einem feststehenden, nicht drehbaren, das Drehgestell (16) tragenden Halterungsteil (30) verbunden sind.

4. Fahrwerkelement nach Anspruch 3, wobei die vorderen und hinteren Gestänge jeweils vordere (44) und hintere (45) Ausgleichsgestänge bzw. Traversen umfassen, die zwischen der Mittelachse (C) und der Vorderachse (B1) sowie der Hinterachse (B2) gelenkig am Drehgestell (16) angebracht sind, erste vordere (46) und hintere (47) Kurbelstangen, die zwischen dem Halterungsteil (30) und der vorderen (44), und hinteren (45) Traverse gelenkig angebracht sind, sowie zweite vordere (48) und hintere (49) Kurbelstangen, die zwischen der vorderen (44) und hinteren (45) Traverse und der Vorderradachse (20) und Hinterradachse (22) gelenkig-angebracht sind.

5. Fahrwerkelement nach Anspruch 4, wobei die vorderen (44) und hinteren (45) Traversen mit dem Drehgestell (16) durch vordere (D1) und hintere (D2) Zwischenachsen, die symmetrisch in Bezug auf die Mittelachse (C) in einer ersten, die Mittelachse (C), die Vorderachse (B1) und die Hinterachse (B2) enthaltenden Ebene (P) symmetrisch angeordnet und parallel zu diesen Achsen ausgerichtet sind, gelenkig verbunden sind.

6. Fahrwerkelement nach Anspruch 5, wobei die vorderen (46) und hinteren (47) Kurbelstangen ganz auf einer Seite der ersten Ebene (P) und symmetrisch in Bezug auf eine zweite, zur ersten Ebene (P) senkrechte und durch die Mittelachse (C) hindurchgehende Ebene angeordnet sind, wenn sich das Drehgestell nicht um diese Achse gedreht/geschwenkt hat, wobei die zweite vordere Kurbelstange (48) ganz auf einer Seite der ersten Ebene entgegengesetzt zu derjenigen, welche die ersten vorderen (46) und hinteren (47) Kurbelstangen enthält, gelegen ist, und die zweite hintere Kurbelstange (49) die erste Ebene quert.

7. Fahrwerkelement nach einem der Ansprüche 5 oder 6, wobei in jedem der vorderen und hinteren Gestänge die erste Kurbelstange (46,47) und die zweite Kurbelstange (48,49) an zwei Teilstücken der Traverse (44,45), die auf beiden Seiten der Zwischenachse (D1,D2) gelegen sind, derart angelenkt sind, dass sie in im wesentlichen senkrechten Richtungen zu den Ausrichtungsrichtungen dieser Teilstücke ausgerichtet sind, wenn sich das Drehgestell (16) nicht um die Mittelachse (C) gedreht/geschwenkt hat.

8. Fahrwerkelement nach einem der Ansprüche 4 bis 7, wobei die zweiten vorderen (48) und hinteren (49) Kurbelstangen jeweils über vordere (50) und hintere (51) Schäkel bzw. Kupplungsbügel, die in im wesentlichen senkrechten Richtungen zu den zweiten vorderen (48) und hinteren (49) Kurbelstangen ausgerichtet sind, wenn sich das Drehgestell (16) nicht um die Mittelachse (C) gedreht/geschwenkt hat, mit der Vorderradachse (20) bzw. der Hinterradachse (22) gelenkig verbunden sind.

9. Fahrwerkelement nach einem der vorangehenden Ansprüche, wobei das Drehgestell (16) außerdem eine feststehende zentrale Radachse (18) trägt, die in einer zur Mittelachse (C) senkrechten Richtung ausgerichtet ist.

10. Fahrwerkelement nach einem der vorangehenden Ansprüche, wobei die Mittel zum Drehen/Schwenken des Drehgestells (6) um die Mittelachse (C) Zylinder (34) umfassen, welche auf das Drehgestell über Zahnstangen-Ritzel-Mechanismen (36,38) einwirken.

## Claims

1. Element (14) of an aircraft landing gear, comprising a truck (16) having at least two axles (18, 20, 22) and means (34, 36, 38) for pivoting said truck about a central axis (C), oriented substantially vertically when the aircraft is on the ground, **characterized in that** the truck (16) has a front axle (20) and a rear axle (22) able to respectively pivot about a front axis (B1) and a rear axis (B2), parallel to the central axis (C) and positioned symmetrically on either side of said central axis, a pivoting control means (44-49) acting mechanically on each of the front (20) and rear (22) axles, so that the pivoting of the truck (16) about the central axis (C) has as simultaneous effects a pivoting in the opposite direction of the front axle (20) and a pivoting in said same direction of the rear axle (22), respectively about the front (B1) and rear (B2) axes.

2. Landing gear element according to claim 1, wherein the pivoting control means (44-49) is designed in such a way that the pivoting actions of the front axle (20) and rear axle (22) have the same amplitude, smaller than that of the pivoting of the truck (16) about the central axis (C).

3. Landing gear element according to either of the claims 1 and 2, wherein the pivoting control means comprises a front linkage (44, 46, 48) and a rear linkage (45, 47, 49), which are independent of one another, both being connected to a non-rotary, fixed, support part( 30) carrying the truck (16).

4. Landing gear element according to claim 3, wherein the front and rear linkages respectively incorporate front (44) and rear (45) rudder bars, articulated to the truck (16) between the central axis (C) and the front (B1) and rear (B2) axes, first, front (46) and rear (47) rods, articulated between the support part (30) and the front (44) and rear (45) rudder bars, and second, front (48) and rear (49) rods, articulated between the front (44) and rear (45) rudder bars and the front (20) and rear (22) axles.

5. Landing gear element according to claim 4, wherein the front (44) and rear (45) rudder bars are articulated to the truck (16) by intermediate/front (D1) and rear (D2) spindles, arranged symmetrically with respect to the central axis (C), in a first plane (P) containing the central (C), front (B1) and rear (B2) axes and oriented parallel to said axes.

6. Landing gear element according to claim 5, wherein the first, front (46) and rear (47) rods are entirely located on the same side of the first plane (P) and symmetrically with respect to a second plane, perpendicular to the first plane (P) and passing through the central axis (C), when the truck has not pivoted about said axis, the second, front rod (48) being entirely located on the same side of the first plane, opposite to that containing the first, front (46) and rear (47) rods, and the second, rear rod (49) traversing the first plane.

7. Landing gear element according to either of the claims 5 and 6, wherein, in each of the front and rear linkages, the first rod (46, 47) and the second rod (48, 49) are articulated on two sections of the rudder bar (44, 45), located on either side of the intermediate axis (D1 D2), so as to be oriented in directions substantially perpendicular to the orientation directions of said sections, when the truck (16) has not pivoted about the central axis (C).

8. Landing gear element according to any one of the claims 4 to 7, wherein the second, front (48) and rear (49) rods are respectively articulated on front (20) and rear (22) axles by means of front (50) and rear (51) shackles, oriented in directions substantially perpendicular to the second, front (48) and rear (49) rods, when the truck (16) has not pivoted about the central axis (C).

9. Landing gear element according to any one of the preceding claims, wherein the truck (16) also supports a fixed, central axle (18), oriented in a direction perpendicular to the central axis (C).

10. Landing gear element according to any one of the preceding claims, wherein the means for pivoting the truck (16) about the central axis (C) comprise rams (34) acting on the truck by means of rack and pinion mechanisms (36, 38).
